# EUROPEAN PATENT SPECIFICATION

(11) **EP 2 768 687 B1**
(45) Date of publication and mention of the grant of the patent: **05.06.2019**
(21) Application number: 12841988.4
(22) Date of filing: 09.10.2012
(51) Int. Cl.: B60K 15/067

(54) **BRACKET FOR A VEHICLE TANK**
HALTERUNG FÜR EINEN FAHRZEUGTANK
SUPPORT POUR RÉSERVOIR DE VÉHICULE

(30) Priority: 20.10.2011 SE 1150970
(43) Date of publication of application: 27.08.2014
(73) Proprietor: Scania CV AB, 151 87 Södertälje (SE)
(72) Inventor: LEPPÄNEN, Marko, 144 40 Rönninge (SE); ÖRBOM, Joakim, 169 73 Solna (SE); NÄSMAN, Erik, 146 37 Tullinge (SE)
(74) Representative: Scania CV AB
(86) International application number: PCT/SE2012/051076
(87) International publication number: WO 2013/058699

(56) References cited:
- WO-A1-98/10959
- WO-A1-2006/033608
- WO-A1-2007/069987
- WO-A1-2011/078238
- WO-A1-2011/126443
- CN-Y- 200 975 948
- DE-U1- 29 912 337
- US-A- 4 645 221
- US-A- 4 645 221

## Description

### TECHNICAL FIELD

The invention relates to a bracket for a vehicle tank. It relates also to a vehicle provided with a bracket.

### BACKGROUND

Known brackets of this kind are usually provided with a strap which extends round the tank and has a threaded connection by which it is tightened relative to the bracket. If however the tank is made not of metal but of more flexible material, e.g. polymer material, as is for example often the case of reducing agent tanks for combustion engines, there is risk that the clamping force of the strap may over time become insufficient, with the result that the preload force in the threaded connection is lost. In the case of brackets with straps it may also be difficult to fit and remove the tank, particularly in regions where there is limited space sideways.

WO98/10959 describes a railing bracket having two clamping jaws and reciprocally displacing using a screw.

Further brackets for vehicle tanks are known from documents WO2006/033608, US4,645,221 and DE29912337U.

### SUMMARY OF THE INVENTION

An object of the present invention is therefore to propose a bracket of the kind indicated in the introduction which can reliably keep a tank made of any material fastened and maintain preload in the threaded connection.

Another object is to propose a bracket which makes the tank to easy to fit to and remove from.

This is achieved by the features indicated in the claims set out below.

One aspect of the invention is disclosed in claim 1.

The fact that the elements are movable along one another towards a stop means that the tank can be clamped with suitable clamping force between the jaws when the elements reach the stop. Thereafter the threaded connection may be tightened with suitable preload against the stop independently of the clamping force between the jaws and the tank, so that this preload is absorbed by the bracket and not, as in a screw clamp, by the tank. The invention thus results in no risk of the threaded connection losing its preload if the tank yields to the clamping force between the jaws.

The fact that the bracket has two rail elements movable along one another makes it easy to take apart and put together from below, e.g. from the underside of a vehicle frame, with the result that the tank need not be first moved sideways for it to be released. The tank may therefore be situated in a readily accessible location, e.g. at the inside of a frame member of a freight vehicle, leaving the outside clear for fitting other vehicle components.

In one embodiment of the invention the stop comprises one of the crosspieces, obviating the need for any separate stop on either of the rails. In this context there is however nothing to bar the possibility of the stop comprising both of the crosspieces.

According to the invention, a side edge of the rail element which engages with the stop runs obliquely in a direction of movement between the elements. The oblique side edge effects clamping of the elements sideways against one another when the threaded connection is tightened. More specifically, mutually facing side surfaces of the elements are then clamped against one another when the threaded connection is tightened, so that the stop comprises also one of these side surfaces and the elements are wedged firmly to one another. Sideways gaps between the elements may thus be avoided. If both of the elements have such oblique edge surfaces, the mutually facing side surfaces can be wedged firmly against one another at both of the mutually inserted ends of the elements.

In one embodiment the rail elements may have a substantially U-shaped cross-section. The threaded connection may then extend in the continuous duct formed between the rails and be accessible to screwing tools from the nearer lower and also the upper end of the duct if so required.

Mutually opposite flanges of the rail elements may have apertures to accommodate the crosspieces. Such apertures may then also be dimensioned to allow the crosspieces to be inserted in them from outside the bracket.

The apertures may have oblique edge surfaces. If for example the apertures in at least one of the rail elements have oblique edge surfaces, adjoining crosspieces, which also engage with an oblique edge surface of the other rail element, may then distribute the force from the threaded connection more equally to the two rail elements.

Each crosspiece may have said stops at its opposite ends and a thickened middle portion with a hole for a screw of the threaded connection. The ends may then be circular cylindrical spigots which can be set freely against the engaging oblique edge surfaces when the threaded connection is tightened, without affecting the force distribution in the elements.

The rail elements may also have reinforcements at the oblique edge surfaces. Such reinforcements may be in the form of pieces of sheetmetal welded on locally to the edge surfaces to reduce the local stresses in the rail elements.

Other features and advantages of the invention may be indicated by the claims and the description of an embodiment example set out below.

### BRIEF DESCRIPTION OF DRAWINGS

FIG. 1 is a perspective view obliquely from the rear of a main portion of a bracket according to the invention;
FIG. 2 is a side view with portions cut away of a pair of parted rail elements of a bracket according to the invention;
FIG. 3 is a side view of a pair of partly pushed-together rail elements according to FIG. 2; and
FIG. 4 is a side view with portions cut away of a bracket according to the invention which supports a tank relative to a frame member of a motor vehicle.

### DETAILED DESCRIPTION OF EMBODIMENT EXAMPLE

A bracket according to the invention has a pair of rail elements 10 and 30 which each have a jaw 24 and 44 respectively for supporting and clamping a tank 80 between them. Although the term "bracket" often refers only to the in this case lower jaw 44, it is here used inclusively for the whole arrangement.

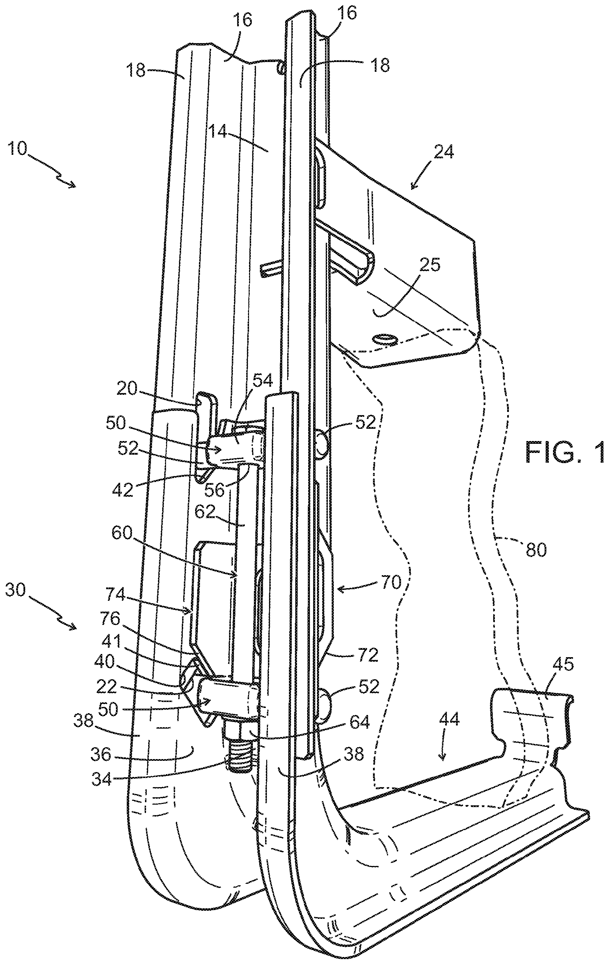

As most clearly illustrated in FIG. 1, the rail elements 10, 30 in the embodiment example depicted are made of sheet steel with mutually complementary substantially U-shaped cross-sectional profiles so that the lower element 30 can be accommodated slidingly in the upper element 10. More specifically, the upper rail element 10 is provided with a bottom flange 14, a pair of mutually opposite side flanges 16 perpendicular to the bottom flange, and a pair of outer flanges 18 parallel with the bottom flange. The lower rail element 30 is similarly provided with a bottom flange 34, a pair of mutually opposite side flanges 36 perpendicular to the bottom flange, and a pair of outer flanges 38 parallel with the bottom flange.

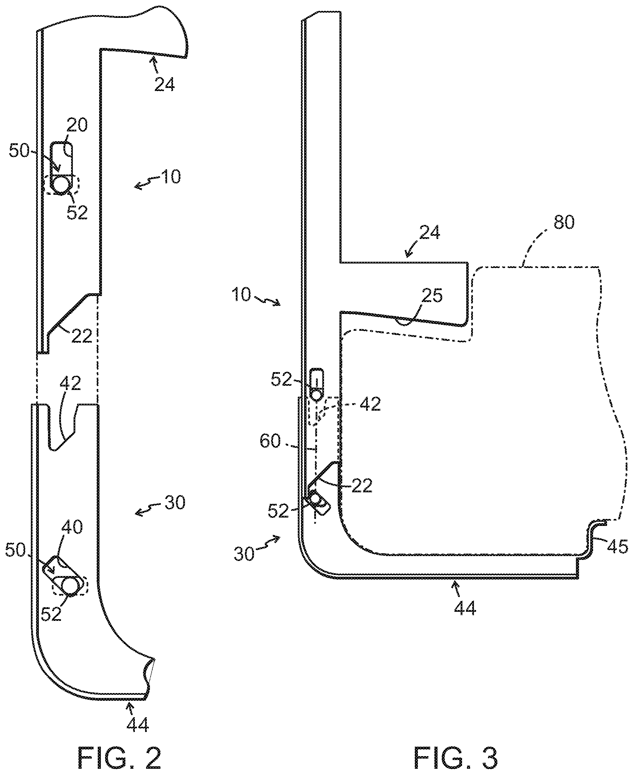

In each rail element 10, 30 there is a crosspiece 50. Although each crosspiece may take the form of a machined part, it is made in the embodiment example by a forging process for good strength. Each crosspiece has a thickened middle portion 54 with a hole 56 and a pair of mutually opposite end spigots 52. The end spigots 52 of the upper crosspiece are accommodated in mutually opposite apertures 20 in the upper rail element 10, and the end spigots 52 of the lower crosspiece are similarly accommodated in mutually opposite apertures 40 in the lower rail element 30. As for example illustrated in FIG. 2, the shape and size of the apertures 20, 40 may be such as to allow the crosspieces 50 to be inserted from outside the rail elements.

A threaded connection 60 (FIG. 1) with a screw 62 and a nut 64 extends through the holes 56 in the crosspieces 50 in order to draw the rail elements 10, 30 together and thereby clamp the tank between the jaws 24, 44.

The arrangement is such that when the tank 80 is sufficiently clamped between the jaws, at least one of the crosspieces, e.g. the upper crosspiece, serves as a stop to prevent further moving together of the rail elements. More specifically, a pair of edge surfaces 42 of the lower element 30 then come into contact with the upper crosspiece's end spigots 52, which thus serve as a stop to prevent further upward movement of the lower element. The threaded connection 60 may then be tightened with appropriate preload against this stop.

In the embodiment depicted, the edge surfaces 42 are also oblique in one direction so that they clamp or wedge the elements 10, 30 against one another at the upper end of the lower element 30 when the threaded connection 60 is tightened against the upper stop 52.

In the embodiment depicted, the lower crosspiece 50 likewise serves as a similar stop whereby oblique edge surfaces 22 of the upper element 10 wedge the elements 10, 30 against one another at the lower end of the upper element when the threaded connection 60 is tightened against the lower stop 52.

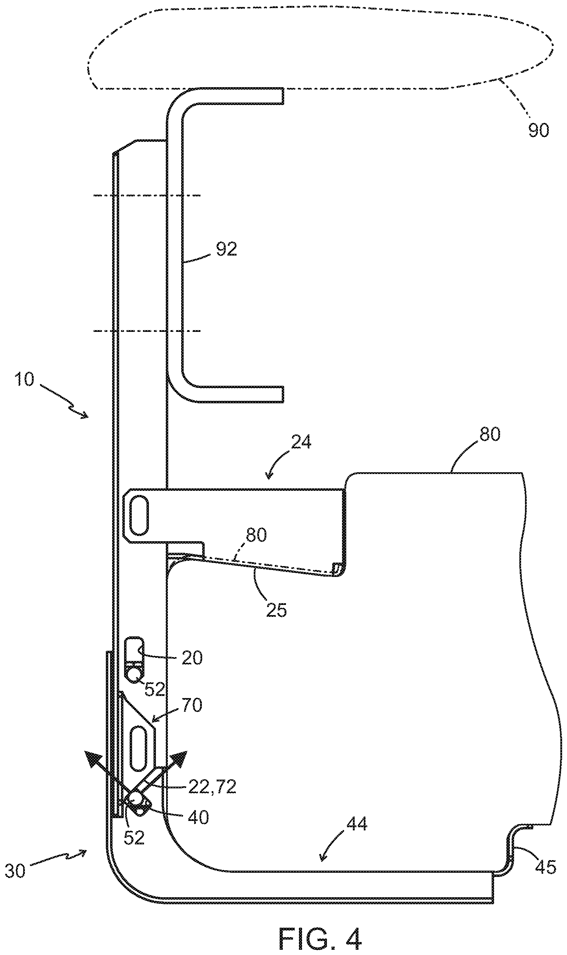

As for example illustrated in FIG. 1, the apertures 40 in the lower element 30 may also have an oblique edge surface 41. When the cylindrical end spigots 52 of the lower crosspiece 50 engage with the respective oblique edge surfaces 22 and 41, the forces acting upon the elements 10, 30 may then be distributed more equally, as represented by the force arrows in FIG. 4. In addition, the resulting bending force in the bracket from the weight of the tank 80 may then be absorbed by the rail elements 10, 30 without the screw 60 being subject to bending loads.

FIG. 1 illustrates also the possibility of strengthening the elements 10, 30 in the regions of engagement with the crosspieces 50. In the embodiment depicted, although other arrangements are possible, the upper element 10 is connected, e.g. by plug welding, to a pair of outer reinforcements 70 which each have an oblique edge surface 72 (only one of them depicted in FIGS. 1 and 4) complementing the oblique edge surfaces 22. The lower element 30 may then likewise be similarly connected, e.g. by plug welding, to in this case an inner U-shaped reinforcement 74 with a pair of oblique edge surfaces 76 (only one of them depicted in FIG. 1) complementing the oblique edge surfaces 41 of the apertures 40.

FIG. 4 depicts a tank 80 fitted to a frame member 92 of a not further depicted freight vehicle 90 by means of a bracket according to the invention. The upper jaw 24 which clamps the tank 80 to the lower jaw 44 has with advantage a oblique underside 25 which by wedge action prevents the tank from moving out from the bracket. In addition, the lower jaw 44 may have an end section 45 which is bent upwards to a shape which holds the tank 80 to the bracket.

The description set out above is primarily intended to facilitate comprehension and no unnecessary limitations of the invention are to be inferred from it. The modifications which will be obvious to one skilled in the art from perusing the description may be effected without departing from the scope of the claims set out below.

## Claims

1. A bracket for a vehicle tank, **characterised**
**by** a pair of rail elements (10, 30) which each have a jaw (24, 44), the jaws (24, 44) being configured for supporting and clamping a vehicle tank between them, the rail elements (10, 30) being movable along one another towards a stop (52),
and by a threaded connection (60) acting between crosspieces (50) of the respective elements to clamp the tank (80) between the jaws when tightened against the stop (52), wherein an edge surface (42, 22, 72) of the rail element (10, 30) which engages with the stop (52) is positioned obliquely in a direction of movement between the rail elements (10, 30).

2. A bracket according to claim 1, such that the stop (52) comprises one of the crosspieces (50).

3. A bracket according to any one of the foregoing claims, such that the rail elements (10, 30) have a substantially U-shaped cross-section.

4. A bracket according to any one of the foregoing claims, such that mutually opposite flanges (16, 36) of the rail elements (10, 30) have apertures (20, 40) to accommodate the crosspieces (50).

5. A bracket according to claim 4, such that the apertures (40) have oblique edge surfaces (41).

6. A bracket according to any one of the foregoing claims, such that each crosspiece (50) has said stops (52) at its opposite ends and a thickened middle portion (54) with a hole (56) for a screw (62) of the threaded connection (60).

7. A bracket according to claim 5, such that the rail elements (10, 30) have reinforcements (70, 72, 74, 76) at the oblique edge surfaces (22, 41).

8. A vehicle (90) provided with a bracket according to any one of the foregoing claims.

## Patentansprüche

1. Halterung für einen Fahrzeugtank, **gekennzeichnet**
**durch** ein Paar von Schienenelementen (10, 30), die jeweils eine Klemmbacke (24, 44) umfassen, wobei die Klemmbacken (24, 44) dazu eingerichtet sind, einen Fahrzeugtank zwischen ihnen zu lagern und zu klemmen, wobei die Schienenelemente (10, 30) aneinander gegen einen Anschlag (52) bewegbar sind, und
durch eine Gewindeverbindung (60), die zwischen Stegen (50) des entsprechenden Elements zum Klemmen des Tanks (80) zwischen die Klemmbacken wirkt, wenn sie gegen den Anschlag (52) festgezogen wird, wobei eine Randfläche (42, 22, 72) des Schienenelements (10, 30), das mit dem Anschlag (52) in Eingriff steht, in einer Bewegungsrichtung zwischen den Schienenelementen (10, 30) schräg positioniert ist.

2. Halterung nach Anspruch 1, wobei der Anschlag (52) einen der Stege (50) umfasst.

3. Halterung nach einem der vorhergehenden Ansprüche, wobei die Schienenelemente (10, 30) einen im Wesentlichen U-förmigen Querschnitt aufweisen.

4. Halterung nach einem der vorhergehenden Ansprüche, wobei einander gegenüberliegende Flanken (16, 36) der Schienenelemente (10, 30) Öffnungen (20, 40) aufweisen, um die Stege (50) aufzunehmen.

5. Halterung nach Anspruch 4, wobei die Öffnungen (40) schräge Randflächen (41) umfassen.

6. Halterung nach einem der vorhergehenden Ansprüche, wobei jeder Steg (50) die Anschläge (52) an dessen gegenüberliegenden Enden und einen verdickten Mittelabschnitt (54) mit einer Öffnung (56) für eine Schraube (62) der Gewindeverbindung (60) aufweist.

7. Halterung nach Anspruch 5, wobei die Schienenelemente (10, 30) Verstärkungen (70, 72, 74, 76) auf den schrägen Randflächen (22, 41) aufweisen.

8. Fahrzeug (90) ausgestattet mit einer Halterung nach einem der vorhergehenden Ansprüche.

## Revendications

1. Support pour réservoir de véhicule, **caractérisé**
**par** une paire d'éléments de rail (10, 30) qui présentent chacun une mâchoire (24, 44), les mâchoires d'accouplement (24, 44) étant configurées pour supporter et serrer un réservoir de véhicule entre elles, les éléments de rail (10, 30) étant mobiles l'un sur l'autre vers une butée (52), et par une liaison filetée (60) agissant entre des croisillons (50) des éléments respectifs pour serrer le réservoir (80) entre les mâchoires lorsqu'il est serré contre la butée (52), dans lequel une surface de bord (42, 22, 72) de l'élément de rail (10, 30) qui s'engage avec la butée (52) est placée de façon oblique dans un sens de déplacement entre les éléments de rail (10, 30).

2. Support selon la revendication 1, de telle sorte que la butée (52) comprenne l'un des croisillons (50).

3. Support selon l'une quelconque des revendications précédentes, de telle sorte de les éléments de rail (10, 30) ont une section transversale sensiblement en forme de U.

4. Support selon l'une quelconque des revendications précédentes, de telle sorte que des brides mutuellement opposées (16, 36) des éléments de rail (10, 30) présentent des ouvertures (20, 40) pour recevoir les croisillons (50).

5. Support selon la revendication 4, de telle sorte que les ouvertures (40) présentent des surfaces de bord obliques (41) .

6. Support selon l'une quelconque des revendications précédentes, de telle sorte que chaque croisillon (50) comporte lesdites butées (52) à ses extrémités opposées et une partie centrale épaissie (54) avec un trou (56) pour une vis (62) du raccord fileté (60).

7. Support selon la revendication 5, de telle sorte que les éléments de rail (10, 30) ont des renforts (70, 72, 74, 76) sur les surfaces de bord obliques (22, 41).

8. Véhicule (90) muni d'un support selon l'une quelconque des revendications précédentes.
